# EUROPEAN PATENT APPLICATION

(11) **EP 0 943 246 A1**
(43) Date of publication of application: **22.09.1999**
(21) Application number: 98660009.6
(22) Date of filing: 04.02.1998
(51) Int. Cl.: A23K 1/175, A23K 1/18

(54) **Complete fodder**

(71) Applicant: SUOMEN REHU OY, 00240 Helsinki (FI)
(72) Inventor: Hissa, Harri, 20380 Turku (FI); Hissa, Kari, 02180 Espoo (FI)
(74) Representative: Papula, Antti

(57) **Abstract**

The invention relates to a complete fodder for the feeding of cows during the dry period. The complete fodder contains the fodder components necessary for the cow during the dry period as well as anionic salts, and the complete fodder is so granulated that the fodder components and the anionic salts form a uniform, homogeneous and mainly solid mixture.

The invention also relates to a fodder diet for the feeding of cows during the dry period. The cows are fed for about 3-4 weeks before calving with complete fodder containing the fodder components necessary for the cow during the dry period as well as anionic salts, and that the complete fodder is so granulated that the fodder components and anionic salts make up a uniform, homogeneous and mainly solid mixture.

## Description

The present invention relates to a complete fodder as defined in the preamble of claim 1. A further object of the invention is a fodder diet as defined in the preamble of claim 5.

Milk fever is one of the commonest diseases in milk cows in Finland. Especially susceptible to milk fever are cows that have calved several times (more than 2-3 times). However, the aim is to keep cows in milk production for a longer time (e.g. 5-6 calfbirths/cow). In practice, however, cows often have to be slaughtered much earlier. Among the commonest reasons are udder inflammation and milk fever.

A central objective in the use of a dry period fodder and dry period diet is to improve the cow's health. 'Dry period' refers to a period before calving during which the cow is fed so as to bring it into a suitable condition.

Milk fever is due to an abrupt fall in the calcium level of the cow's blood at the start of intensive milk production and to the consequent heavily increased need for calcium after calving.

It is known in prior art that milk fever can be prevented via feeding by controlling the cation-anion balance of the cow's nourishment and on the other hand by limiting the supply of calcium. It has been established that especially a diet with a high anion content reduces milk fever in cows. The anion-cation balance of cow feed is measured using the following formula: (sodium - potassium) - (chlorine + sulphur) meq/kg of dry matter. In a conventional complete fodder, this ration is of the order of 220 meq/kg of dry matter, and in silage of the order of 240 meq/kg of dry matter. An anionic diet for cows contains more chlorine and sulphur in relation to sodium and potassium. The action of an anionic diet is not yet known exactly, but it presumably causes a faster mobilisation of calcium from the bones either directly or via increased secretion by reducing calcium retention.

However, the problem is that anionic mineral fodder is hardly savoury to cows. Such fodder is given to cows in conjunction with mineral fodder. However, cows simply do not relish fodder with a high anion content, i.e. they refuse to eat it. Therefore, attempts to prevent milk fever by using fodder with a high anion content are not successful; on the other hand, mineral fodder with a high anion content cannot be mixed with other fodder, because in this case the fodder components will be separated and the anionic fodder will be left uneaten.

A further problem is the high hygroscopicity of anionic salts, which is why fodder containing anionic salts gets cloddy and the nutritive substances are unevenly distributed in the fodder.

It has therefore not been possible in practice to feed cows with anionic food, although its positive effects in preventing milk fever in cows are known.

The object of the present invention is to produce a new type of complete fodder for the feeding of cows during the dry period, the use of which helps prevent milk fever. In this application, complete fodder means fodder that contains all the ordinary nutritive substances necessary for a cow, such as proteins, carbohydrates, minerals, micronutrients, vitamins etc.

As for the features characteristic of the invention, reference is made to the claims.

The complete fodder of the invention for the feeding of cows during the dry period to prevent milk fever is characterized in that it contains the fodder components that a cow needs during the dry period, as well as anionic salts, and that the complete fodder is so granulated that the fodder components and anionic salts make up a uniform, homogeneous and mainly solid mixture.

In investigations carried out in connection with the invention it was unexpectedly observed that by mixing anionic salts in complete cow fodder, i.e. in fodder containing all nutritive substances needed by a cow, and by granulating the mixture thus obtained, a complete fodder is produced in which all fodder components are uniformly mixed and which is considerably more savoury to cows than mineral fodder containing anionic salts. Thus, the invention makes it possible to achieve a diet for cows that incorporates a desired cation-anion balance.

The invention is thus a combination where a known mineral fodder having a desired cation-anion balance is mixed with a known complete fodder and the fodder mixture thus obtained is granulated by a method known in itself. Despite its apparent simplicity, the invention constitutes a significant step forward expressly in the prevention of milk fever. Let it be emphasized here that milk fever has been a difficult economic problem in cattle rearing, for which there has been no solution so far. Only now, thanks to the invention, and as indicated by the tests carried out, has it become possible to significantly reduce the occurrences of milk fever. - Thus, the novelty and inventive standard of the invention are substantiated and emphasized expressly by its importance and the fact that it is only in the present invention that its constituent elements are correctly combined to achieve the desired result.

Let it be further noted that the substantial reduction in the occurrence of milk fever as a result of using fodder granulation known in itself is a really new and unexpected circumstance.

In the complete fodder of the invention, the ratio of cations and anions, (Na+K) - (Cl+S) meq/kg of dry matter, contained in the fodder is in the range - 300...-5000 meq/kg of dry matter, preferably in the range -750...-1500 meq/kg of dry matter, depending especially on the amount used.

These figures express the cation-anion balance in milliequivalents per kilogram of dry matter. With this cation/anion ratio in fodder has provided the best results in the prevention of milk fever in cows. The amount of anionic salts contained in the complete fodder of the invention is generally about 4 - 20 %, preferably about 6 - 12 % of the total weight of the fodder.

The following anionic salts can be used in the complete fodder of the invention: ammonium chloride, ammonium sulphate, magnesium sulphate, calcium chloride, magnesium chloride, calcium sulphate and/or sulphur bloom. It is also possible to add to the fodder of the invention residual molasses containing sulphur, from which the potassium has been precipitated with sulphur compounds.

The fodder of the invention can be granulated by any granulating method known in itself in connection with fodder production, e.g. using a collar-type planar matrix granulator, an extrusion press-type granulator, an expander or any other granulating machine or device known in the art.

In the fodder diet of the invention for the feeding of cows during the dry period, the cows are fed with complete fodder for about 3-4 weeks before calving, which complete fodder contains the fodder components necessary for the cow during the dry period as well as anionic salts, and which complete fodder is so granulated that the fodder mixture is homogeneous.

In the diet of the invention, the ratio of cations and anions (Na-K) - (Cl-S) is in the range 0...-400 meq/kg of dry matter, preferably in the range -50...-250 meq/kg of dry matter.

In an embodiment of the diet of the invention, cows are given complete fodder as provided by the invention in rations of about 1 - 5 kg/day, preferably about 2 - 3 kg/day. The diet with complete fodder is ended at the time of calving. Besides complete fodder, the cows are given water and silage and/or coarse fodder, e.g. hay.

The invention provides the advantage of reducing the adverse effect of anionic salts on palatability as these are mixed with complete fodder and granulated, resulting in a low concentration of anionic salts in the fodder. Furthermore, all fodder components in the fodder of the invention are uniformly mixed in the whole mass of fodder and are not separated from each other. Therefore, the complete fodder of the invention ensures a reliable dosage of the desired anionic salts. Moreover, as the complete fodder for the dry period contains all necessary fodder components, it facilitates the task of feeding the cattle on a farm because it eliminates the need for a separate mineral fodder, which is difficult to dispense and unpalatable to the cows.

### EXAMPLE

A long-time field experiment was carried out on a test farm. In the experiment, 28 cows were fed during the dry period with complete fodder in which the ratio (Na-K) - (Cl+S) meq/kg of dry matter was in accordance with the diet of the invention. The cows had previously calved at least three times. Milk fever occurred in 4 cows, i.e. in 14 % of the group.

As a reference group, an experiment had previously been carried out on the same test farm in which 34 cows with at least three calfbirths behind them were fed during the dry period with conventional dry period complete fodder. Milk fever occurred in 11 cows, i.e. in 32 % of the group.

Thus, according to preliminary observations, the number of occurrences of milk fever was reduced by over 50 % when a diet according to the invention was used in the feeding of pregnant cows during the dry period.

The invention is not restricted to the embodiment presented above as an example, but many other variations are possible within the scope of the inventive idea defined by the claims.

## Claims

1. Complete fodder for the feeding of cows during the dry period, **characterized** in that the complete fodder contains the fodder components necessary for the cow during the dry period as well as anionic salts, and that the complete fodder is so granulated that the fodder components and the anionic salts form a uniform, homogeneous and mainly solid mixture.

2. Complete fodder as defined in claim 1, **characterized** in that the ratio of cations and anions,
(Na+K) - (Cl+S) meq/kg of dry matter, contained in the fodder is in the range -300...-5000 meq/kg of dry matter, preferably in the range -750...-1500 meq/kg of dry matter.

3. Complete fodder as defined in claim 1 or 2, **characterized** in that the complete fodder contains ammonium chloride, ammonium sulphate, magnesium sulphate, calcium chloride, calcium sulphate and/or sulphur bloom.

4. Complete fodder as defined in any one of claims 1 - 3, **characterized** in that the amount of anionic salts contained in the complete fodder is 4 - 20 %, preferably 6 - 12 % of the total weight of the fodder.

5. Fodder diet for the feeding of cows during the dry period, **characterized** in that the cows are fed for about 3-4 weeks before calving with complete fodder containing the fodder components necessary for the cow during the dry period as well as anionic salts, and that the complete fodder is so granulated that the fodder components and anionic salts make up a uniform, homogeneous and mainly solid mixture.

6. Fodder diet as defined in claim 5, **characterized** in that the ratio of cations and anions
(Na-K) - (Cl-S) contained in the complete fodder is in the range 0...-400 meq/kg of dry matter, preferably in the range -50...-250 meq/kg of dry matter.

7. Fodder diet as defined in claim 5 or 6, **characterized** in that the complete fodder contains ammonium chloride, ammonium sulphate, magnesium sulphate, calcium chloride, calcium sulphate and/or sulphur bloom.

8. Fodder diet as defined in any on claims 5-7, **characterized** in that the amount of anionic salts contained in the complete fodder is 4 - 20 %, preferably 6 - 12 % of the total weight of the fodder.

9. Fodder diet as defined in any on claims 5-8, **characterized** in that the cows are given complete fodder in rations of about 1 - 5 kg a day, preferably about 2 - 3 kg a day.

10. Fodder diet as defined in any on claims 5-9, **characterized** in that, in addition to complete fodder, the cows are given water and coarse fodder.
